Europäisches Patentamt

European Patent Office

Office européen des brevets

(19)

(11) Publication number: **0 161 799**
A2

## (12) EUROPEAN PATENT APPLICATION

(21) Application number: **85302522.9**

(22) Date of filing: **10.04.85**

(51) Int. Cl.⁴: **B 31 B 3/74**

(30) Priority: **04.05.84 GB 8411522**

(43) Date of publication of application: **21.11.85**
**Bulletin 85/47**

(84) Designated Contracting States: **AT BE CH DE FR GB IT LI LU NL SE**

(71) Applicant: **METAL BOX p.l.c., Queens House Forbury Road, Reading RG1 3JH Berkshire (GB)**

(72) Inventor: **Oakley, John Richard, 87 Churchward Avenue, Swindon Wiltshire, SN2 1NW (GB)**

(74) Representative: **Sawers, Lawrence Peter et al, PAGE, WHITE & FARRER 5 Plough Place New Fetter Lane, London EC4A 1HY (GB)**

(54) A device for producing a travelling jet of hot gas.

(57) A device for producing a travelling jet of hot gas which travels in a direction transverse to the axis of the jet, particularly for use in apparatus for erecting cartons wherein a heat activatable adhesive coating has to be heated at a particular location or locations while the cartons are conveyed continuously through the apparatus, comprises a fixed outer tube (25) formed with a longitudinally extending gas outlet or series of outlets (26, 38) and a rotatable inner tube (27) fitting closely with the outer tube and formed with a helical gas passage (28) communicating with its interior. Hot gas is supplied to the interior of the inner tube (27) which is rotated so that the point of coincidence of the helical gas passage with the outlet apertures moves longitudinally along the outer tube (25) so as to cause the hot gas jet to travel along the tube accordingly. In modifications, the rotatable tube may be the outer tube, or both tubes may be rotated.

EP 0 161 799 A2

ACTORUM AG

## A DEVICE FOR PRODUCING A TRAVELLING
## JET OF HOT GAS

This invention relates to a device for producing a travelling jet of hot gas, which travels in a direction transverse to the axis of the jet. The device is particularly (though not exclusively) useful in apparatus for the erection of cartons, wherein a heat-activatable adhesive coating has to be heated at a particular location or locations in every one of a series of partially erected cartons while they are being conveyed through the apparatus, prior to application of sealing pressure to cause adhesion at these locations.

It is well known in the packaging industry to activate a heat-activatable coating at a particular location or locations on a carton by a jet or jets of hot air. The jets have normally been fixed in position, so that either every carton has had to be stopped opposite to the jet to ensure adequate heating at the desired locations or the jets have had to be elongated so that much of the hot air is directed at undesired locations, with consequent waste of heat.

An object of the present invention is to provide a device for producing a travelling jet of hot gas, which can be used for example in a carton erecting apparatus in which the cartons are conveyed continuously, without waste of heat.

According to the present invention, a device for producing a travelling jet of hot gas which travels in a direction transverse to the axis of the jet comprises two tubes coaxially arranged one within the other and each formed with a gas passage means communicating its interior with its exterior, the respective gas passage means extending along the length of the respective tubes but being angularly disposed in relation to one another so that they coincide at one or more points, the device further including gas supply means for supplying hot gas to the interior of the inner tube, and drive means for rotating at least one of the tubes in relation to the other tube so that the or each point of coincidence of the gas passage means of the two tubes moves longitudinally in a substantially straight line along the outer tube to allow said hot gas to issue therefrom as a travelling jet.

By causing such rotation to take place at an appropriate speed, one can obtain a desired speed of movement of the one or more points of coincidence of the gas passage means of the two tubes and hence of the travel of the jet or jets of hot gas issuing from the device.

In a preferred arrangement, one of the tubes is fixed and its gas passage means extends in a substantially straight line along the length of the tube while the other tube is rotatable and its gas passage means extends helically along the length of the tube. The helical gas passage of the rotatable tube may extend for less than one turn about the rotatable tube, or for a whole turn, or it may extend for more than one turn where two or more travelling jets are required.

In an alternative arrangement, both tubes may be rotatable and the drive means may be arranged to cause them to counter-rotate in opposite senses and at the same speed, the gas passage means of the two tubes being helical and of the same helix angle but of opposite sense.

The gas passage means of the outer tube may consist of a series of aligned slots extending through the wall of the outer tube, or of a series of bores extending through the wall of the outer tube. As a further possible alternative, a single elongate slot may be provided.

The gas passage means of the inner tube may be formed by a groove in the outer surface of the inner tube and holes formed through the wall of the inner tube along the base of the groove so as to communicate the groove with the interior of the inner tube.

In the case where one of the tubes is fixed, the fixed tube may be the outer tube and the inner tube may be the rotatable tube. With such an arrangement, the means for supplying hot gas to the interior of the inner tube may comprise a source of hot gas and a duct connecting the source to one end of the outer tube, the adjacent end of the inner tube being located within the outer tube and being open, whereas the remote end of the inner tube is closed; furthermore, the means for rotating the inner tube may comprise a pinion or sprocket mounted upon a closed end of the inner tube which projects from the adjacent end of the outer tube.

The invention also resides in an apparatus for erecting cartons comprising means for conveying a series of partially erected cartons continuously through the apparatus, wherein a device as described above is disposed adjacent to the conveying means so as to direct each of one or more travelling jets of hot gas at a particular location on every one of the said partially erected cartons as it is conveyed past the device.

A specific embodiment of the invention will now be described in more detail by way of example and with reference to the accompanying drawings in which:-

FIGURE 1 is a plan view of a carton erecting apparatus incorporating two devices for producing travelling jets of hot gas, in accordance with the invention,

FIGURE 2 is a perspective view of a partially erected carton travelling through the apparatus of Figure 1 and ready to be subjected to the travelling jets of hot gas,

FIGURE 3 is a plan view to a larger scale than Figure 1 and partially in section of one of the devices for producing a travelling jet of hot gas,

FIGURE 4 is a perspective view of the inner and outer tubes of the device of Figure 3, and

0161799

- 4 -

FIGURE 5 is an end view of a carton passing along the conveyor past the device for producing the travelling jet of hot gas.

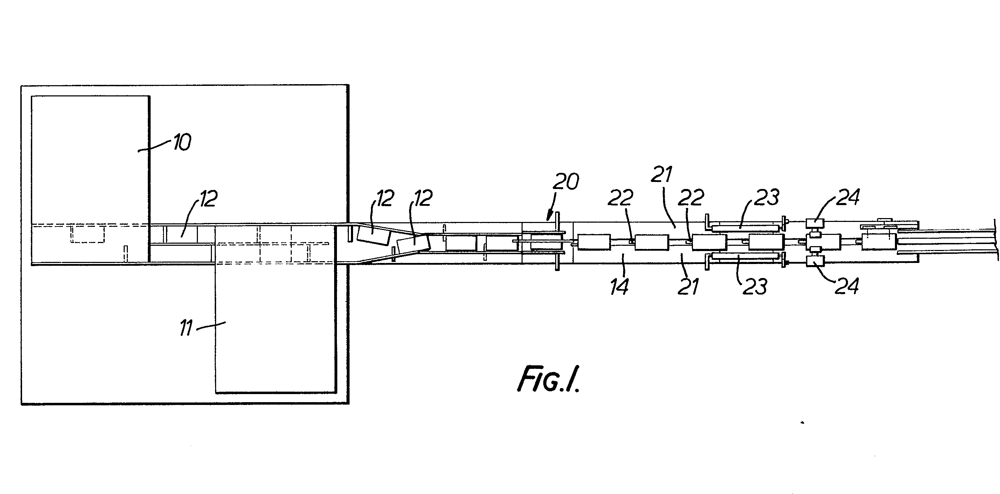

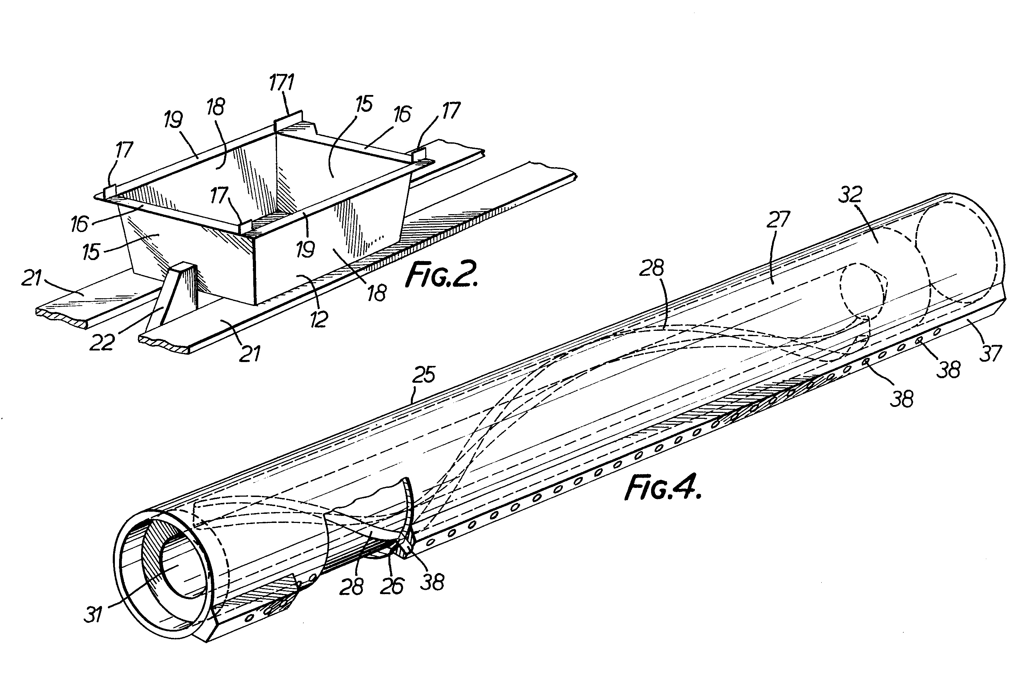

The apparatus shown in Figure 1, which is described in more detail in our British Patent Application No. 8411523, is diagrammatically shown to comprise two initial forming sections 10, 11 which are essentially identical and which produce partially erected tray-type cartons 12 which are carried forward by a continuously moving conveyor 14. The tray-type cartons 12, as shown in Figure 2, have front and rear end walls 15 carrying respective flanges 16, the ends of which are turned up to form tabs 17. One such corner tab is enlarged as shown at 171. The carton 12 also has side walls 18, each of which carries a flange 19.

In the condition in which the partially erected cartons 12 leave the initial forming sections 10, 11, the flanges 16 are horizontal and the tabs 17, 171 are bent up into the vertical position as shown in Figure 2, but the flanges 19 are coplanar with the side walls 18. The cartons 12 then pass through a flange folding device 20 (Figure 1) where the side flanges 19 are bent down to the horizontal position shown in Figure 2.

From the flange folding device 20, the cartons 12 pass, generally at regular intervals, along the conveyor 14, which is shown as comprising two rails 21 with pusher dogs 22 projecting up between them (see Figures 1 and 2). Two devices 23 are arranged one on each side of the conveyor and each adapted to direct respective and separate travelling jets of hot gas at the tabs 17, 171 as they move with the carton along the conveyor.

The cartons 12 are provided in known manner with an overall coating of a polyester resin such as polyethylene terephthalate, which can be activated by heat to an adhesive condition. After passing the devices 23, the tabs 17, 171 of each carton 12 are pressed down by pressure rollers 24 into contact with the adjacent parts of the side flanges 19 so as to seal the two together and to complete a continuous peripheral flange all round the mouth of the carton 12. This flange may be used, for example, for reception of a flat lid which may be sealed thereto after filling of the carton.

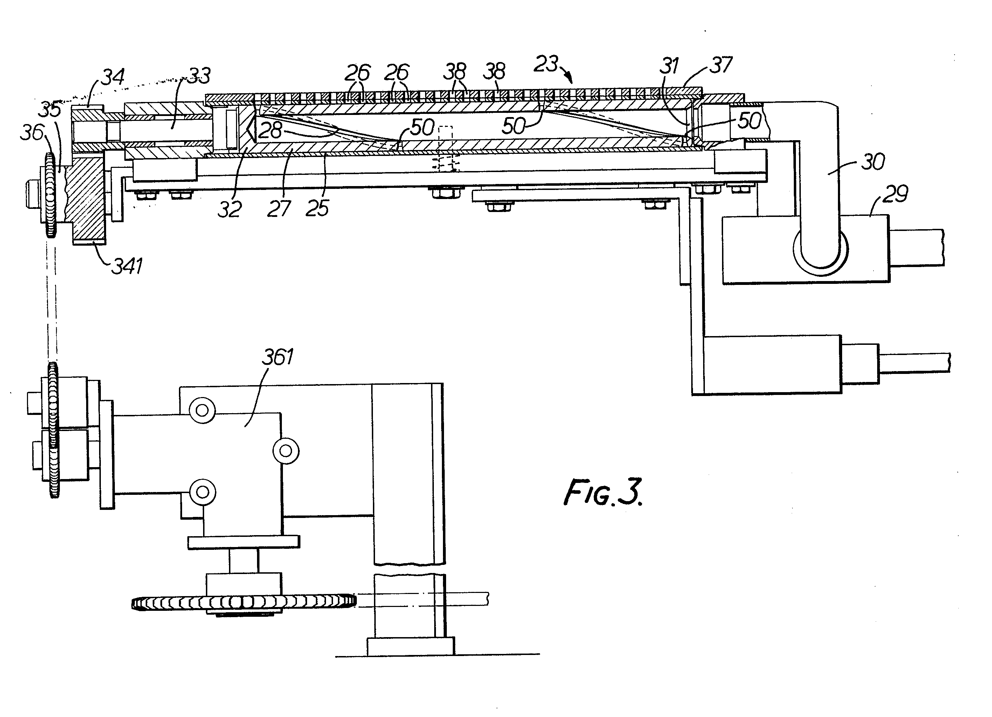

Figures 3, 4 and 5 illustrate one of the devices for producing the travelling jets of hot gas in detail. The device 23 comprises a fixed outer tube 25 mounted parallel to and above the conveyor 14 and formed with a longitudinally extending series of gas outlet apertures in the form of bores 26 extending through its wall in a line parallel to its axis. The bores 26 thus form a gas passage means in the outer tube. A co-axial rotatable inner tube 27 fits closely within the outer tube 25 and is formed with a gas passage means comprising a helical groove 28 which is formed in its outer surface and communicates with its interior through holes 50 drilled through the wall of the inner tube at intervals along the base of the groove.

A heat exchanger 29 supplies hot gas through a pipe 30 connected to one end of the outer tube 25, the adjacent end 31 of the rotatable inner tube 27 being open to receive the gas. The other end 32 of the inner tube 27 is closed and connected through a short shaft 33 carrying a pinion 34 meshing with a pinion 341 on a drive shaft 35, shown here as carrying a chain sprocket 36 for receiving a continuous constant speed rotary drive from a gearbox 361 in dependence upon the conveyor drive speed.

The outer tube may be provided with an elongated nozzle 37 having bores 38 aligned with the bores 26 in the outer tube 25, for directing the jets of hot gas to the required locations.

The helical groove 28 extends for one-and-a-half turns about the inner tube 27. Therefore, as the inner tube is rotated, at any time there will be either one or two points of coincidence of the groove with the outlet apertures, depending upon the rotational position of the inner tube in relation to the line of bores 26. At each point of coincidence a jet of hot gas can issue through the relevant bores 26, 38.

The inner tube is driven to rotate at such a speed, and with such a direction and angular position in relation to the pusher dogs 22 of the conveyor, that each point of coincidence, and therefore the related jet, moves along the device 23 in the same direction and at the same speed as the movement of the cartons along the conveyor 14, and in such a longitudinal position that the jet can impinge continuously on an adjacent tab 17 or 171 of a carton moved by a dog 22 as the tab in question passes along the length of the device 23. The impingement is of sufficient duration to ensure that the pressure rollers 24 can later be effective to cause adherence of the tab to the adjacent side flange 19 as previously described.

In order to achieve the desired correlation of the travelling gas jets of the devices 23 with the tabs 17, 171 of each successive carton on the conveyor 14, without wastage of energy caused by "passes" of the jets along the devices when no cartons are present to receive them, the pitch of the helical groove 28 is made equal to the longitudinal spacing of the tabs on each carton, and to one half of the pitch of the pusher dogs 22.

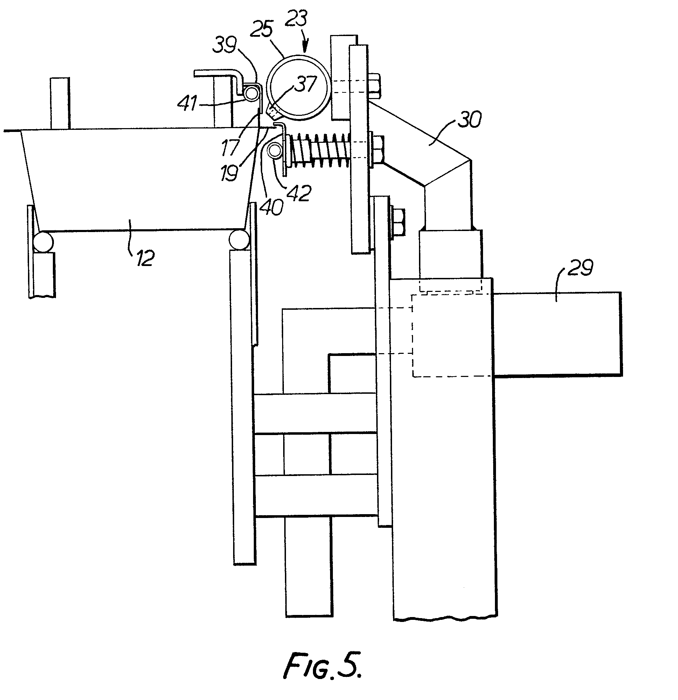

As shown in Figure 5, each device 23 is mounted with its nozzle 37 inclined downwards to direct the travelling jets of hot gas into the angles between the tabs 17 and the adjacent flanges 19. Profiled bars 39, 40 are provided to hold the tabs 17, 171 and flanges 19 in the correct position during heating, and water cooling tubes 41, 42 are disposed adjacent the bars 39, 40 to prevent overheating.

In possible modifications of the device 23, the nozzle 37 may be omitted or formed with a single elongate slot in place of the bores 38. Furthermore, in place of the bores 26, an elongated outlet slot or a series of elongated outlet slots parallel to the axis of the tubes 25, 27 may be provided in the wall of the outer tube 25.

The devices 23 provide an efficient and economical method of ensuring that heat is applied only to the desired locations on the cartons 12 while they are being continuously conveyed through the apparatus.

Whilst in the described embodiment the inner tube is rotated and the outer tube is stationary, by suitable modification of the gas passage means, the rotary drive and the gas supply to the tubes, the inner tube may be made stationary and the outer tube rotated, in which case the inner tube has a gas passage means extending in a substantially straight line along its length and the outer tube has a helical gas passage. Alternatively both tubes may be rotated. A preferred arrangement of the latter kind has the inner and outer tubes driven to counter-rotate in opposite senses and at the same speed, the gas passage means of the two tubes being helical and of the same helix angle but of opposite sense.

CLAIMS

1. A device for producing a travelling jet of hot gas which travels in a direction transverse to the axis of the jet, characterised by two tubes coaxially arranged one within the other and each formed with a gas passage means communicating its interior with its exterior, the respective gas passage means extending along the length of the respective tubes but being angularly disposed in relation to one another so that they coincide at one or more points, the device further including gas supply means for supplying hot gas to the interior of the inner tube, and drive means for rotating at least one of the tubes in relation to the other tube so that the or each point of coincidence of the gas passage means of the two tubes moves longitudinally in a substantially straight line along the outer tube to allow said hot gas to issue therefrom as a travelling jet.

2. A device according to claim 1, characterised in that one of the tubes is fixed and its gas passage means extends in a substantially straight line along the length of the tube while the other tube is rotatable and its gas passage means extends helically along the length of the tube.

3. A device according to claim 1, characterised in that both tubes are rotatable and the drive means is arranged to cause them to counter-rotate in opposite senses and at the same speed, the gas passage means of the two tubes being helical and of the same helix angle but of opposite sense.

4. A device according to any one of the preceding claims, characterised in that the gas passage means of the outer tube consists of a series of aligned slots extending through the wall of the outer tube.

5. A device according to any one of claims 1 to 3, characterised in that the gas passage means of the outer tube consists of a series of bores extending through the wall of the outer tube.

6.    A device according to any one of the preceding claims, characterised in that the gas passage means of the inner tube is formed by a groove in the outer surface of the inner tube and holes formed through the wall of the inner tube along the base of the groove aso as to communicate the groove with the interior of the inner tube.

7.    A device according to claim 2 or any one of claims 4 to 6 as appendant to claim 2, characterised in that the fixed tube is the outer tube and the rotatable tube is the inner tube.

8.    A device according to claim 7 characterised in that the gas supply means comprises a source of hot gas and a duct connecting the source to one end of the outer tube, the adjacent end of the inner tube being located within the outer tube and being open, whereas the remote end of the inner tube is closed.

9.    A device according to claim 8 characterised in that the means for rotating the inner tube comprises a pinion or sprocket mounted upon a closed end of the inner tube which projects from the adjacent end of the outer tube.

10.    Apparatus for erecting cartons comprising means for conveying a series of partially erected cartons continuously through the apparatus, characterised in that a device according to any one of the preceding claims, is disposed adjacent to the conveying means so as to direct each of one or more travelling jets of hot gas at a particular location on every one of the said partially erected cartons as it is conveyed past the device.

Fig.I.

1/4

0161799

0161799

Fig.2.

Fig.4.

FIG.3.

3/4

0161799

FIG.5.